(19) Europäisches Patentamt
European Patent Office
Office européen des brevets

(11) Publication number: 0 339 621 A2

(12) # EUROPEAN PATENT APPLICATION

(21) Application number: 89107583.0

(51) Int. Cl.[4]: C08G 75/02

(22) Date of filing: 26.04.89

(30) Priority: 28.04.88 US 187756

(43) Date of publication of application: 02.11.89 Bulletin 89/44

(84) Designated Contracting States: AT BE CH DE ES FR GB GR IT LI LU NL SE

(71) Applicant: PHILLIPS PETROLEUM COMPANY
5th and Keeler
Bartlesville Oklahoma 74004(US)

(72) Inventor: Nesheiwat, Afif Michael
25 Hickory Pl.
Charham, NJ 07928(US)

(74) Representative: Geissler, Bernhard, Dr. jur., Dipl.-Phys. Patent- und Rechtsanwälte et al
Bardehle-Pagenberg-Dost-Altenburg-Frohwitter-Geissler & Partner
Postfach 86 06 20
D-8000 München 86(DE)

(54) **Method to recover granular poly(arylene sulfide ketone) and poly(arylene sulfide diketone) by a liquid quench process.**

(57) A process for treating a first particulate poly(arylene sulfide ketone) or poly(arylene sulfide diketone) resin in a first slurry, wherein the liquid medium comprises a polar organic compound, to produce a second particulate poly(arylene sulfide ketone) or particulate poly(arylene sulfide diketone) resin with a bulk density greater than that of its respective first resin, comprising: (a) liquifying the first particulate resin in the first slurry to form a first liquid mixture comprising a liquid-phase resin and the polar organic compound; (b) adding, to the first liquid mixture, a liquid separation agent to produce a second liquid mixture, wherein the ratio of the moles of liquid separation agent present in the second liquid mixture to the moles of divalent sulfur present in the first resin is at least about 7:1; and (c) reducin the temperature of the second liquid mixture sufficiently to solidify the liquid-phase resin and form a second slurry comprising a polar organic compound and a second particulate resin with a bulk density greater than that of the first particulate resin.

EP 0 339 621 A2

Xerox Copy Centre

# METHOD TO RECOVER GRANULAR POLY(ARYLENE SULFIDE KETONE) AND POLY(ARYLENE SULFIDE DIKETONE) BY A LIQUID QUENCH PROCESS

## Field of the Invention

This invention relates to processes for treating polymers of aromatic compounds. In one aspect, this invention relates to processes for the production and recovery of granular poly(arylene sulfide ketone)s or poly(arylene sulfide diketone)s.

## Background of the Invention

Poly(arylene sulfide ketone) (henceforth PASK) resins and poly(arylene sulfide diketone) (henceforth PASDK) resins are engineering thermoplastics of potential commercial interest for film, fiber, molding, and/or composite applications because of their outstanding thermal and mechanical properties. General processes for the production of poly(arylene sulfide ketone)s and poly(arylene sulfide diketone)s are known in the art. For example, poly(arylene sulfide ketone)s or poly(arylene sulfide diketone)s can be prepared by the reaction of an alkali metal sulfide in a polar organic compound with a polyhaloaromatic ketone or a polyhaloaromatic diketone, respectively.

A major disadvantage often associated with the production of poly(arylene sulfide ketone)s and poly-(arylene sulfide diketone)s pertains to the particle size of the polymeric particles produced. Specifically, at the completion of the polymerization reaction, the reaction mixture is a slurry comprising a liquid phase (i.e., predominantly a polar organic compound and water) and a particulate phase (i.e., predominantly polymeric resin(, wherein the polymer is in the form of powder-like particles having very low bulk densities (i.e. generally less than 10 lbs/ft$^3$).

This extremely fine powder-like resin filters very slowly and, thus, hampers the pclymer's washing and recovery processes. Recovery and processing of PASK and PASDK resins which have low bulk densities and are in a powder-like form are extremely difficult, if not impossible.

Extreme difficulty in feeding an extruder with this low bulk density powder-like resin has also been experienced. Efforts to force feed an extruder with an auger-fed hopper does not overcome these difficulties, noe does compacting the powder, such as in a heated 2-roll mill. Furthermore, the fine particle size introduces a non-systematic error in the determination of the melt flow of the polymeric resins. Variations in the time required to load the barrel of the melt flow apparatus with low bulk density powder produces an uncertainty in the test results since a polymer's melt viscosity is a function of time.

Treating powder-like PASK and PASDK resins in a manner which produces granular resin particles, having bulk densities greater than their untreated counterparts, would greatly improve the recovery and processability of these resins. Therefore, one object of this invention is to provide a method for treating PASK and PASDK resins in a manner which produces granular resin particles having bulk densities greater than their untreated counterparts, wherein the handling, filterability, and processability of the respective polymeric resins are improved.

Other aspects, concepts, and objects of this invention will become apparent from the following detailed description when considered in light of the following detailed description and the appended claims.

## Statement of the Invention

This novel invention discloses a process to produce a more granular particulate PASK and PASDK of increased bulk densities.

In accordance with this invention, a process is provided for treating a first particulate poly(arylene sulfide ketone) resin or a first particulate poly(arylene sulfide diketone) resin, present in a first slurry, wherein the liquid medium of the first slurry comprises a polar organic compound, to produce a second particulate poly(arylene sulfide ketone) resin or a second particulate poly(arylene sulfide diketone) resin, such that the second particulate resin produced has a bulk density greater than that of its respective first resin, comprising: (a) liquifying the first particulate resin in the first slurry to form a first liquid mixture

comprising a liquid-phase resin and the polar organic compound; (b) adding, to the first liquid mixture, a liquid separation agent, to produce a second liquid mixture, wherein the amount of liquid separation agent added is sufficient to result in a molar ratio of the moles of liquid separation agent present in the second liquid mixture to the moles of divalent sulfur present in the first resin of at least about 7:1; and (c) reducing the temperatures of the second liquid mixture sufficiently to solidify the liquid-phase resin and form a second slurry comprising a polar organic compound and a second particulate resin, wherein the second particulate resin has a bulk density greater than that of the first particulate resin.

## Detailed Description of the Invention

As used herein, the term "bulk density" refers to the density of a granular polymeric resin as determined by completely filling a container, having a known weight and volume, to its brim with the polymer sample to be tested. The bulk density of the specific polymer is then calculated after measuring the weight of the polymer in pounds (lbs) as a function of the volume of the container in cubic feet ($ft^3$). For the purpose of this invention, PASK resins or PASDK resins having bulk densities of at least 15 $lbs/ft^3$ are deemed to overcome handling, filterability, and/or processing problems often associated with the powder-like resins which have bulk densities less than such as about 10 $lbs/ft^3$.

The polymers which are most apt to be treated by the process of this invention, because of the availability of materials from which they are prepared, are those having the repeating unit:

$$-(R_1-\overset{O}{\overset{||}{C}}-)_n-R_2-S-$$

wherein, n is 1 or 2; and $R_1$ and $R_2$ can be the same or different and are selected from the group consisting of phenylene, biphenylene, naphthylene, biphenylene ether, and lower alkyl-substituted derivatives thereof. The term "lower alkyl", as used herein, refers to alkyl groups having 1 to 6 carbon atoms. Examples of such lower alkyl groups include, but are not limited to, methyl, propyl, isobutyl, n-hexyl, and the like.

Although other polymeric resins are not excluded, in general, the presently preferred PASK resins and the PASDK resins, recovered by this invention, are poly(phenylene sulfide ketone) resins having the repeating unit:

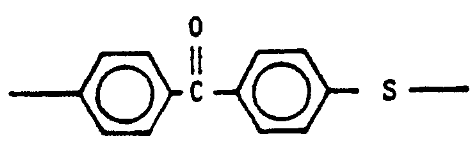

and poly(phenylene sulfide diketone) resins having the repeating unit:

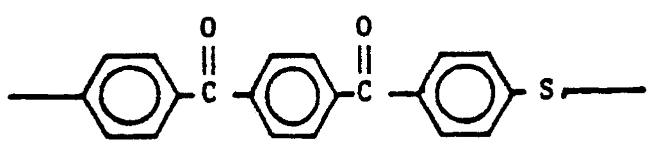

This invention provides processes for increasing both the particle size and the bulk density of either a first PASK resin or a first PASDK resin. Generally, the inventive process comprises: (a) liquifying the first particulate resin present in a first slurry, wherein the liquid component of the first slurry comprises a polar organic compound, to form a first liquid mixture comprising a liquid-phase resin and the polar organic compound ; (b) adding, to the first liquid mixture, a liquid separation agent, to produce a second liquid mixture, wherein the amount of liquid separation agent added is sufficient to result in a molar ratio of the moles of liquid separation agent present in the second liquid mixture to the moles of divalent sulfur present in the first resin of at least about 7:1; and (c) reducing the temperature of the second liquid mixture sufficiently to permit the liquid-phase resin to solidify and form a second slurry comprising a polar organic compound and a second particulate resin, wherein the second particulate resin has a bulk density greater than that of the first particulate resin. Thereafter, the seond particulate resin can be recovered from the second slurry.

This invention is effective for increasing the bulk density of any PASK or PASDK resin. The resins can have their bulk densities increased in accordance with the embodiments of this invention at any time after

the resin is prepared, as long as a first slurry can be prepared wherein the solid component comprises at least a particulate PASK or PASDK resin and the liquid component comprises at least a polar organic compound. One example of a process that will produce such a first slurry is one wherein a dihalo-substituted aromatic ketone or diketone is reacted with (1) either (a) a base (e.g., NaOH) and a sulfur-containing source (e.g., NaHS) or (b) an alkali metal sulfide (e.g., $Na_2S$), (2) water, and (3) a polar organic compound (eg., N-methyl-2-pyrrolidone) under polymerization conditions.

Another example of a process which results in a first slurry, is taking a PASK or PASDK resin which has already been prepared, recovered, and, optionally, dried, and adding this resin to a liquid comprising a polar organic compound and, optionally, water.

Liquifying the first particulate PASK resin or the first particulate PASDK resin contained within the first slurry of this invention can be accomplished by using any suitable liquification process known by those skilled in the art. One example of such a suitable method includes, but is not limited to, heating the first slurry to a temperature at which the first particulate resin liquifies. It is noted, however, that since the first slurry comprises an amount of a polar organic compound which also functions as a solvent of the particulate resins, depending upon the type and/or amount of the polar organic compound present in the first slurry, the elevated temperature of the resin liquification step need not, necessarily, exceed the melting point of the resin.

In the first slurry, the molar ratio of the moles of polar organic compound per moles of divalent sulfur present in the resin is generally determined by mechanical and/or economic limitations. Preferably, in the first slurry, the molar ratio of the polar organic compound to the divalent sulfur present in the resin ranges from about 3:1 to about 25:1; more preferably from about 6:1 to about 20:1; and even more preferably from about 8:1 to about 16:1.

Another example of a suitable liquification process is the addition of a suitable compound which can function as a solvent of the resin. Depending upon the type and/or amount of this compound being subsequently added to the first slurry, it may stille be necessary to elevate the temperature of the first slurry in order to liquify the particulate resin contained therein. For example, if the solid component of the first slurry comprises a specific particulate PASK resin such as poly(phenylene sulfide ketone), and the liquid component of the same slurry consists solely of a specific polar organic compound which also functions as a solvent such as N-methyl-2-pyrrolidone, in order to liquify the specific resin, the first slurry need only be heated to a temperature of at least about 280 °C (536 °F).

However, as other components are included in this first slurry, the temperatures needed to liquify the PASK polymer will generally increase. For example, if the solid component of a first slurry comprises poly-(phenylene sulfide ketone) as the PASK resin and the liquid component of the same slurry consists essentially of N-methyl-2-pyrrolidone and a small amount of water (i.e., approximately 10% by weight of liquid component), in order to liquify the specific particulate resin, this first slurry must be heated to a temperature of at least about 300 °C (572 °F).

PASK resins generally have a polymerization reaction temperature ranging from about 232 °C (450 °F) to about 288 °C (550 °F). At the completion of typical PASK polymerization reactions, a first slurry is generally formed. This first slurry comprises a particulate PASK resin as the solid component and a mixture consisting essentially of a polar organic compound and water as a liquid component. Since in a typical PASK polymerization reaction the liquid component of the first slurry does not consist solely of a polar organic compound, the presently preferred method of liquifying PASK resins, after a completed polymerization reaction, is to heat the first slurry to a temperature of at least about 300 °C (572 °F), more preferably in the range from about 300 °C (572 °F) to about 325 °C (617 °F).

If, on the other hand, the solid component of a first slurry comprises, as the solid component, a specific particulate PASDK resin such as poly(phenylene sulfide diketone) and, as the liquid component, a polar organic compound which also functions as a solvent such as N-methyl-2-pyrrolidone, in order to liquify the specific particulate resin, this first slurry need only be heated to a temperature of at least about 323 °C (613 °F).

However, as other components are included in the first slurry, the temperature needed to liquify the PASDK polymer will generally increase. For example, if the solid component of the first slurry comprises poly(phenylene sulfide diketone) as the PASDK resin and the liquid component of this same slurry consists essentially of N-methyl-2-pyrrolidone and a small amount of water (i.e., approximately 10% by weight of liquid component), in order to liquify the particulate resin, this first slurry must be heated to a temperature of at least about 343 °C (650 °F).

PASDK resins generally have a polymerization reaction temperature ranging from about 232 °C (450 °F) to about 288 °C (550 °F). At the completion of typical PASDK polymerization reactions, a first slurry is generally formed. This first slurry comprises a particulate PASDK resin as the solid component and a

mixture consisting predominantly of a polar organic compound and water as the liquid component. Since in a typical PASDK polymerization reaction the liquid component of the first slurry does not consist solely of a polar organic compound, the presently preferred method of liquifying PASDK resins, after a completed polymerization reaction, is to heat the first slurry to a temperature of at least about 343° C (650° F), more preferably in the range from about 343° C (650° F) to about 371° C (700° F).

The liquid separation agent, suitable for use in this invention, can be any which has the following characteristics: (a) soluble in the polar organic compound present in the first slurry; (b) a non-solvent of the particulate resin; and (c) able to effectuate a phase separation in the liquid mixture betwen the liquid-phase polymer and the remaining liquid components of the liquid mixture. Examples of suitable liquid separation agents include, but are not limited to, water; paraffinic hydrocarbons, such as heptane, octane and nonane; higher boiling alcohols, such as hexanol; higher boiling ethers, such as tetraethylene glycol dimethylether and diphenyl ether; and the like, and mixtures thereof. Due to its effectiveness and commercial availability, water is the presently preferred agent.

As stated earlier, the PASK and PASDK polymerization reactions often result in a first slurry wherein due to the polymerization recipe an initial amount of an agent is already present which can be used for phase separation purposes. Depending upon the specific polymerization process, the amount of a suitable phase separation agent present in the first slurry, at the completion of the polymerization reaction, can range from an undetectable amount up to an amount which is, in and of itself, at least sufficient to effect phase separation in a liquid reaction mixture between the liquid-phase polymer and the polar organic compound. Generally, during a polymerization process for the preparation of PASK or PASDK, wherein the sulfur source is provided by employing a mixture of a base (e.g., NaOH) and sodium hydrosulfide (i.e., NaHS), approximately one mole of water is produced for each mole of divalent sulfur present in the repeating units of the respective resins.

To increase both the particle size and the bulk density of either a PASK resin or a PASDK resin in accordance with this invention, the molar ratio of the molar sum of (1) any phase separation agent present in the first slurry at the the completion of the polymerization reaction and (2) the liquid separation agent subsequently added to the liquid mixture, to that of the moles of divalent sulfur present in the particulate resin present in the first slurry must be at least about 7:1 Preferably, the molar ratio will range from about 7:1 to about 28:1, more preferably from about 11:1 to about 26:1, and even more preferably from about 14:1 to about 24:1.

The moles of divalent sulfur present in the resin can be readily determined by one skilled in the art. If the first slurry contains the first particulate resin are the slurry which results at the completion of a typical polymerization reaction, the moles of divalent sulfur present in the resin is approximately equal to the moles of sulfur charged to the polymerization vessel.

When practicing this invention, the internal pressure within the polymerization reaction vessel will increase if the temperature and pressure within the treating vessel is sufficient to vaporize the separation agent subsequently added. In other words, since the conditions within the treating vessel are sufficient to vaporize water, if water is employed as the separation agent, the pressure within the treating vessel will increase. In some applications, however, it is desirable to operate a polymerization reactor at lower temperatures and pressures. Therefore, another embodiment of this invention provides a process for increasing the bulk density of the first particulate polymeric resin at lower temperatures and pressures.

The method of this latter embodiment provides a process for treating a first particulate PASK resin or a first particulate PASDK resin, present in a first slurry, wherein the liquid medium of the first slurry comprises a polar organic compound, to produce a second particulate PASK resin or a second particulate PASDK resin, such that the second resin produced has a bulk density greater than that of its respective first resin, comprising: (a) liquifying the first particulate resin in the first slurry to form a first liquid mixture comprising a liquid-phase resin and the polar organic compound; (b) reducing the temperature of the first liquid mixture to a temperature not less than 20° C above the liquid-to-solid phase transitional temperature of the liquid-phase resin contained therein; (c) adding, to the first liquid mixture, a liquid separation agent, to produce a second liquid mixture, wherein the amount of liquid separation agent added is sufficient to result in a molar ratio of the moles of liquid separation agent present in the second liquid mixture to the moles of divalent sulfur present in the first resin of at least about 7:1; (c) reducing the temperature of the second liquid mixture sufficiently to solidify the liquid-phase resin and form a second slurry comprising a polar organic compound and a seond particulate resin, wherein the second resin has a bulk density greater than that of the first particulate resin; and (d) recovering the second particulate resin from the second slurry.

In this latter embodiment, when the liquid separation agent is added to the liquid reaction mixture after the temperature of the liquid reaction mixture has been lowered to a temperature not less then 20° C above the liquid-to-solid phase transitional temperature of the liquid-phase resin, the internal pressure of the

reactor vessel does not increase to the degree observed when the separation agent is added at a temperature at or above that which is necessary to liquify the specific resin under a given set of conditions. For example, if water is employed as the separation agent of this latter embodiment, the reactor pressure will still increase; however, it will not increase to the extent observed if water was employed as the separation agent of the embodiment which does not include the step which cools the first liquid mixture prior to adding the liquid separation agent thereto.

The phrase "liquid-to-solid phase transitional temperature", as used herein, refers to the temperatur at which the liquid reaction mixture must be lowered in order for the liquid-phase resin, of the liquid mixture, to solidify.

This liquid-to-solid phase transitional temperature differs somewhat with the type of resin produced and is readily determined by one skilled in the art. For example, by using a high pressure, flat glass gage that can be heated, such as that available from the Jerguson Gage & Valve Co., it can be seen that poly-(phenylene sulfide ketone) has a transitional temperature of about 245° C (473° F). Therefore, to increase the bulk density of a particulate poly(phenylene sulfide ketone) resin in accordance with the latter embodiment of this invention, after the resin has been liquified, the temperature of the liquid mixture, comprising the liquified resin and the polar organic compound, is lowered from the liquification temperature to a temperature at or above about 265° C (509° F).

On the other hand, PASDK resins have a liquid-to-solid phase transitional temperatures which are generally greater than those for PASK resins. For example, poly(phenylene sulfide diketone) has a liquid-to-solid phase transitional temperature of about 302° C (575° F). Therefore, to increase the bulk density of a particulate poly(phenylene sulfide diketone) resin in accordance with the latter embodiment of this invention, after the resin has been liquified, and before adding the liquid separation agent, the temperature of the liquid mixture is lowered from the resin liquification temperature to a temperature at or above about 322° C (612° F).

After the particulate resin has been liquified and the appropriate amount of the selected liquid separation agent has been added to the liquid mixture, the temperature of the liquid mixture is lowered to a temperature at or below the specific resin's liquid-to-solid phase transitional temperature. As stated earlier, this transitional temperature differs with the type of polymer produced and is readily determined by one skilled in the art.

## Examples

Examples provided are intended to assist in a further understanding of this invention. Particular materials employed, species, and conditions are intended to be further illustrative of the invention and not limit the reasonable scope thereof.

## Example I

This example demonstrates a process for increasing both the particle size and the bulk density during the recovery process of a particulate poly(arylene sulfide ketone) resin by the process of this invention. The poly(arylene sulfide ketone) used in this example is poly(phenylene sulfide ketone), henceforth PPSK.

The PPSK used in this example was prepared by reacting, in a stirred 2-gallon reaction vessel, 502 grams (2.0 moles) of the monomer p-dichlorobenzophenone (p-DCBP), 192 grams of a 58.3 weight-% sodium hydrosulfide (NaHS) solution (i.e., 112 grams (2 moles) NaHS and 80 grams (4.4 moles) water), 80 grams (2.0 moles) of sodium hydroxide (NaOH), 2400 ml (24.2 moles) of N-methyl-2-pyrrolidone (NMP), and 110 ml (6.1 moles) of water, at 250° C for approximately 3 hours at a mixer speed of 250 rpm. Note, the total amount of divalent sulfur (i.e., NaHS) charged into the reactor, prior to polymerization was 112 grams (2 moles); and the total amount of water charged into the same reactor, prior to polymerization, was 189.9 grams (10.6 moles).

After the three hour reaction period, a first slurry was produced wherein the solid component was predominantly particulate PPSK and the liquid component was predominantly a mixture of NMP and water. It should be noted that during polymerization one mole of water is produced for each mole of divalent sulfur (i.e., NaHS) initially charged into the reactor. Therefore, in addition to the 10.6 moles of water initially charged into the reactor, prior to polymerization, the first slurry also has an additional two moles of water

which were produced during polymerization.

The particulate PPSK contained in the first slurry was then liquified by increasing the temperature of the first slurry to 300°C and increasing mixer speed to 500 rpm. The internal pressure of the reactor, at 300°C, was 380 psig.

While the internal temperature of the reactor was being held at 300°C, 500 ml (27.8 moles) of water were slowly added to the reactor. Upon charging the water into the polymerization reactor, the internal pressure of the reactor increased to 500 psig.

The contents of the reactor were then cooled at a rate of approximately 1°C per minute while being agitated at a mixture speed of approximately 250 rpm. When the internal temperature of the reaction vessel reached approximately 245°C, the liquid-phase resin began to solidify and form a second slurry.

The internal temperature of the reaction vessel continued to be cooled until the temperature of the reactor's contents reached approximately 25°C. The particulate resin was then recovered from the second slurry using a No. 200 U.S. Sieve series (74 micron) screen. The recovered resin particles were then washed with distilled water and subsequently dried at 125°C for approximately 5 hours. Henceforth, this resin will be referred to as Resin 1. Visual and quantitative observations for Resin 1 are recorded in Table I.

For the purpose of further demonstrating the effectiveness of the present invention, three additional PPSK resins (i.e., Resins 2, 3, and 4) were prepared. These resins were prepared and recovered in accordance with the same procedure set out for Resin 1 except for the following: (a) for Resin 3, the amount of monomer initially charged to the reaction vessel was 504 grams (2.01 moles) of p-dichlorobenzophenone, and (b) for Resin 4, after the three-hour reaction period, the temperature of the first slurry was not sufficiently raised to liquify all of the PPSK resin contained therein. Specifically, after the polymerization reaction period, the first slurry containing Resin 4 was raised to 290°C, as opposed to 300°C. The data for Resins 2-4 are recorded in Table I.

A control Resin 5 was prepared in accordance with the same procedure set out for Resin 1. The only difference between the preparation of Resin 5 and that of Resin 1 were that for Resin 5, (a) the first slurry was not subsequently heated and (b) there was no addition of a liquid separation agent to the first slurry after polymerization was completed. Specifically, at the completion of the polymerization reaction of Resin 5, the temperature of the contents of the reaction vessel was approximately 250°C. The contents of the reaction vessel containing Resin 5 were then cooled until a temperature of about 25°C was reached. Resin 5 was then recovered from the reaction mixture slurry, washed with distilled water and dried in accordance with the same procedure set out for Resin 1. Data for Resin 5 are recorded in Table I.

Table I

EFFECTS OF USING A LIQUID QUENCHING PROCESS AT LIQUIFICATION TEMPERATURES

| Resin No. | Divalent Sulfur (moles) | Water (moles) | Separation Agent | | Molar Ratio | Reactor Conditions | | Reactor Conditions | | Bulk Density ($lbs/ft^3$) | Type of Particles Produced |
|---|---|---|---|---|---|---|---|---|---|---|---|
| | | | Type | Charged (moles) | | Temp. (°C) | Press. (psig) | Temp. (°C) | Press. (psig) | | |
| 1 | 2.0 | 12.6 | WATER | 27.8 | 20:1 | 300 | 380 | N/A | 500 | 20 | granular |
| 2 | 2.0 | 12.6 | WATER | 27.8 | 20:1 | 300 | 380 | 265 | 530 | 21 | granular |
| 3 | 2.0 | 12.6 | WATER | 27.8 | 20:1 | 300 | 380 | 268 | 550 | 20 | granular |
| 4 | 2.0 | 12.6 | WATER | 27.8 | 20:1 | 290 | N/A | N/A | 530 | 13 | powder |
| 5 | 2.0 | 12.6 | NONE | ---- | 6:1 | 250 | 200 | --- | --- | 9.9 | powder |

Moles of divalent sulfur present in the resin after polymerization which are determined by assuming that the sulfur present in the resin is approximately equal to the moles of sulfur charged into th polymerization reactor.

Moles of water present in the first slurry at the completion of the polymerization reaction prior to the addition of any additional separation agent which are the sum of the moles of water initially charged into the reactor prior to polymerization and the moles of water produced during polymerization.

Molar ratio of the molar sum of (1) the moles of water present in the first slurry at the completion of the polymerization reaction and (2) the moles of separation agent subsequently added to the li uid mixture, to the moles of divalent sulfur present in the particulate resin.

Reactor conditions prior to adding any separating agent.

Reactor conditions after the addition of the separating agent.

The abbreviation "N/A" indicates that the data was not collected.

The data of Table I demonstrates that the molar ratio of the sum of the moles of water present, prior to the addition of any separating agent, plus the moles of water charged as the separating agent to the moles of divalent sulfur present in the resin, for Resins 1-4, was approximately 20:1. The corresponding molar ratio for control Resin 5 was 6.3:1, since no additional separation agent was subsequently added.

The results recorded in Table I demonstrate that, without the addition of any separation agent (i.e., Resin 5), the molar ratio of the moles of water present in the first slurry to the moles of divalent sulfur present in the resin was less than 7:1. This resulted in a resin which is in the form of a powder having a bulk density of less than 10 lbs/ft$^3$. Moreover, while the use of a liquid separation agent, such as water, resulted in the formation of granular particles (i.e., Resin 1-3), if the temperature to which the first slurry is subsequently heated is not sufficient to liquify the particulate polymeric resin therein, the configuration of the particles produced will still be in the form of a powder (see, Resin 4).

Therefore, the data of Table I demonstrates that when a liquid separation agent, such as water, is added in proper proportion to a liquid mixture comprising a liquified PPSK resin and a polar organic compound the result is a polymer having an increased bulk density and a desirable granular configuration.

## Example II

This example demonstrates a process for increasing both the particle size and the bulk density of a particulate poly(arylene sulfide ketone) resin, wherein, during the inventive process, the internal pressure of the reaction vessel does not exceed 500 psig. The poly(arylene sulfide ketone) used in this example is poly(phenylene sulfide ketone), henceforth PPSK.

The PPSK used in this example was prepared by reacting, in a stirred 2-gallon reaction vessel, 502 grams (2.0 moles) of the monomer p-dichlorobenzophenone, 192 grams of a 58.3 weight-% sodium hydrosulfide (NaHS) solution (i.e., 112 grams (2 moles) NaHS and 80 grams (4.4 moles) water, 80 grams (2.0 moles) of sodium hydroxide (NaOH), 2400 ml (24.2 moles) N-methyl-pyrrolidone (NMP), and 108 ml (6.0 moles) of water, at 250 °C for approximately 3 hours at a mixer speed of 250 rpm. Note, the total amount of divalent sulfur (i.e., NaHS) charged into the reactor prior to polymerization was 112 grams (2 moles); and, the total amount of water charged into the same reactor, prior to polymerization, was 189.9 grams (10.6 moles).

After the three hour reaction period, a first slurry was produced wherein the solid component was predominantly particulate PPSK and the liquid component was predominantly a mixture of NMP and water. It should be noted that during polymerization one mole of water is produced for each mole of divalent sulfur (i.e., NaHS) initially charged into the reactor. Therefore, in addition to 10.6 moles of water charged into the reactor, prior to polymerization, the first slurry also had an additional two moles of water which were produced during polymerization.

The particulate PPSK, contained in the first slurry, was then liquified by increasing the temperature of the first to 300 °C and increasing the mixer speed to 500 rpm. The internal pressure of the reactor, at 300 °C, was 350 psig.

After the particulate PPSK was liquified, the temperature of the liquid reaction mixture was lowered to 280 °C. At this temperature, the PPSK resin was still in a liquid phase, and the reactor's pressure was lowered to 300 psig. While the internal temperature of the reactor was held at 280 °C, 450 ml (25 moles) of water were slowly added. Upon charging the water to the liquid reaction mixture, the internal temperature of the reaction vessel dropped to 260 °C while the pressure increased to 410 psig.

The contents of the reaction vessel were then cooled at a rate of approximately 1 °C per minute while being agitated at a speed of approximately 250 rpm. When the internal temperature of the reaction vessel reached approximately 245 °C, the liquid-phase resin began to solidify and form a second slurry. The internal temperature of the reaction vessel continued to be cooled until the temperature of contents of the reaction vessel reached approximately 25 °C. The particulate resin was then recovered from the second slurry using a No. 200 U.S. Sieve Series (74 micron) screen. The recovered resin particles were washed with distilled water and subsequently dried at 125 °C for approximately 5 hours. This resin is referred to as Resin 6. Data for Resin 6 are recorded in Table II.

For the purpose of further demonstrating the effectiveness of the present invention, four additional PPSK resins (i.e., Resins 7-10 were prepared. These resins were prepared and recovered in accordance with the same procedure for Resin 6. The only difference between the preparation of Resins 7-10 and that of Resin 6 were (a) the amount of separation agent charged to the liquid mixture and (b) the temperature of the reaction vessel contents when the liquid separation agent was charged to the liquid mixture. These

variables, along with data for Resins 7-10, are recorded in Table II.

TABLE II

| EFFECTS OF USING A LIQUID QUENCHING PROCESS AT TEMPERATURES BELOW LIQUIFICATION TEMPERATURES | | | | | | | | | | | |
|---|---|---|---|---|---|---|---|---|---|---|---|
| Resin No. | Divalent Sulfur (moles) | Water (moles) | Separation Agent | | Molar Ratio | Reactor Conditions | | Reactor Conditions | | Bulk Density ($lbs/ft^3$) | Type of Particles Produced |
| | | | Type | Charged (moles) | | Temp. (°C) | Press. (psig) | Temp. (°C) | Press. (psig) | | |
| 6 | 2.0 | 12.6 | WATER | 25 | 19:1 | 280 | 300 | 260 | 410 | 15.0 | granular |
| 7 | 2.0 | 12.6 | WATER | 25 | 19:1 | 270 | 270 | 250 | 370 | 15.0 | granular |
| 8 | 2.0 | 12.6 | WATER | 16.7 | 15:1 | 280 | 300 | 265 | 375 | 15.2 | granular |
| 9 | 2.0 | 12.6 | WATER | 16.7 | 15:1 | 270 | 280 | 250 | 350 | 13.0 | powder |
| 10 | 2.0 | 12.6 | WATER | 25 | 19:1 | 263 | 240 | 248 | 380 | 7.0 | powder |

See footnote "a" of Table I.
See footnote "b" of Table I.
See footnote "c" of Table I.
Temperature of the reactor contents after the liquification temperature of 300 °C was reached but before the liquid separation agent was added.
See footnote "d" of Table I.
It is believed that technical errors affected the data for this resin.

The data from Table II demonstrates that the molar ratio of the sum of the moles of water present, prior to the addition of any separation agent, plus the moles of water charged as the separation agent, to the moles of divalent sulfur present in the resin, for Resins 6, 7 and 10 is approximately 19:1. The corresponding molar ratio for Resins 8 and 9 is approximately 15:1.

The results recorded in Table II demonstrate that if a sufficient amount of the separation agent (i.e., water) is added to a liquid mixture comprising a liquified PPSK resin, while the liquid mixture is at a temperature of at least 20° C above the liquid-to-solid phase transitional temperature, the result is a polymer having an increased bulk density and a granular configuration (see, Resins 6-8).

If, however, the same amount of the same separation agent is added to a liquid mixture comprising a liquified PPSK resin while the liquid reaction mixture is at a temperature less than 20° C above the liquid-to-solid phase transitional temperature, the addition of the liquid separation agent decreases the temperature of the reaction mixture to a point below the liquid-to-solid phase transitional temperature of the PPSK resin and a powder forms, (i.e., compare data for Resins 7 and 10). It should be noted that technical errors are believed to have adversely affected the data for Resin 9.

Therefore, the data of Table II demonstrates that when a sufficient amount of a separation agent (i.e., water) is employed with a liquid mixture comprising a liquified PPSK resin and a polar organic compound (i.e., NMP), after the temperature of the liquid mixture has been lowered to at least 20° C above the liquid-to-solid phase transitional temperature, the internal pressure of the reaction vessel, during the polymer recovery process, was maintained below 500 psig. The data further demonstrates that the resulting PPSK resin had an increased bulk density and a granular configuration.

It is evident from the foregoing that various modifications can be made to the embodiments of this invention without departing from the spirit and scope thereof, which will be apparent to those skilled in the art. Having thus described the invention, it is claimed as follows.

## Claims

1. A process for treating a first particulate resin selected from the group consisting of poly(arylene sulfide ketone) and poly(arylene sulfide diketone), present in a first slurry, wherein the liquid component of said first slurry comprises a polar organic compound, to produce a second particulate resin, wherein said second particulate resin has a bulk density greater than that of its respective first particulate resin, comprising:

(a) liquifying said first particulate resin in said first slurry to form a first liquid mixture comprising a liquid-phase resin and said polar organic compound;

(b) adding, to said first liquid mixture, a liquid separation agent, to produce a second liquid mixture, wherein the amount of said liquid separation agent added is sufficient to result in a molar ratio of the moles of liquid separation agent present in said second liquid mixture to the moles of divalent sulfur present in said first particulate resin of at least about 7:1, preferably this mole ratio ranging from 7:1 to 28:1, more preferably from 11:1 to 26:1; most preferably from 14:1 to 24:1;

(c) reducing the temperature of said second liquid mixture sufficiently to solidify said liquid-phase resin and form a second slurry comprising said polar organic compound and a second particulate resin, wherein said second resin has a bulk density greater than that of its respective first particulate resin.

2. A process in accordance with claim 1 wherein said first particulate resin comprises poly(arylene sulfide ketone), preferably poly(phenylene sulfide ketone).

3. A process in accordance with claim 2 wherein said liquification of said first particulate resin comprises heating said first slurry to a temperature of at least 300° C, preferably to a temperature in the range from about 300° C to about 325° C.

4. A process in accordance with claim 2 or 3 wherein said first slurry is prepared by reacting a dihaloaromatic ketone, an alkali metal sulfide, water, and a polar organic compound under polymerization conditions.

5. A process in accordance with claim 4, wherein said dihaloaromatic ketone is a dihalobenzophenone, preferably 4,4′ dichlorobenzophenone, said alkali metal sulfide is sodium sulfide and said polar organic compound is selected from the group consisting of N-methyl-2-pyrrolidone and N-cyclohexyl-2-pyrrolidone.

6. A process in accordance with claim 1 wherein said first particulate resin comprises poly(arylene sulfide diketone), preferably poly(phenylene sulfide diketone).

7. A process in accordance with claim 6, wherein said liquification of said first particulate resin comprises heating said first slurry to a temperature of at least 343° C, preferably to a temperature in the range from about 343° C to about 371° C.

8. A process in accordance with claim 6 or 7 wherein said first slurry is prepared by reacting a dihaloaromatic diketone, an alkali metal sulfide, water and a polar organic compound under polymerization conditions.

9. A process in accordance with claim 8 wherein said dihaloaromatic ketone is bis-1,3-(4-chlorobenzoyl) benzene, said alkali metal sulfide is sodium sulfide and said polar organic compound is selected from the group consisting of N-methyl-2-pyrrolidone and N-cyclohexyl-2-pyrrolidone.

10. A process in accordance with one of the preceding claims wherein said liquid component of said first slurry further comprises water.

11. A process in accordance with claim 10 wherein the molar ratio of the molar sum of the moles of said water present in said first slurry, prior to said liquification of said first particulate resin and the moles of said liquid separation agent subsequently added to said first liquid mixture, to the moles of divalent sulfur present in said first particulate resin is at least about 7:1.

12. A process in accordance with one of the preceding claims wherein said separation agent is selected from the group consisting of para hydrocarbons, higher boiling alcohols, and higher boiling ethers, particularly wherein said separation agent is water.

13. A process in accordance with one of the preceding claims further comprising a temperature reduction step comprising:
reducing the temperature of said first liquid mixture to a temperature not less than about 20° C above the liquid-to-solid phase transitional temperature of said first particulate resin, said temperature reduction step is performed after said first particulate resin is liquified but before said liquid separation agent is added to said first liquid mixture.